# NEUE EUROPÄISCHE PATENTSCHRIFT

(11) **EP 3 393 687 B2**
(45) Veröffentlichungstag und Bekanntmachung des Hinweises auf die Entscheidung über den Einspruch: **16.04.2025**
(45) Hinweis auf die Patenterteilung: 11.09.2019
(21) Anmeldenummer: 16823270.0
(22) Anmeldetag: 21.12.2016
(51) Int. Cl.: B09B 3/00, B09B 5/00, C22B 1/00, C22B 7/00, C22B 21/00, G01N 23/222, G01N 23/223, G01N 21/71, B07C 5/00, B07C 5/34, C22C 21/00, B07C 5/346

(54) **VERFAHREN UND VORRICHTUNG FÜR DAS RECYCLING VON METALLSCHROTTEN**
METHOD AND DEVICE FOR RECYCLING METAL SCRAPS
PROCÉDÉ ET DISPOSITIF POUR LE RECYCLAGE DE FERRAILLES

(30) Priorität: 23.12.2015 DE 102015122818
(43) Veröffentlichungstag der Anmeldung: 31.10.2018
(73) Patentinhaber: Speira GmbH, 41515 Grevenbroich (DE)
(72) Erfinder: WIMMER, Michael, 50858 Köln (DE); GILLNER, Ronald, 53913 Swisttal (DE); BAUERSCHLAG, Nils Robert, 52072 Aachen (DE); ROSS, Thomas, 40591 Düsseldorf (DE)
(74) Vertreter: Cohausz & Florack
(86) Internationale Anmeldenummer: PCT/EP2016/082112
(87) Internationale Veröffentlichungsnummer: WO 2017/108908

(56) Entgegenhaltungen:
- EP-A1- 0 096 092
- WO-A1-97/05969
- FR-A1- 2 562 913
- FR-A1- 2 562 913
- RU-C1- 2 260 795
- US-A- 4 317 521
- US-A- 5 813 543
- US-B1- 6 266 390
- US-B1- 6 266 390
- US-B2- 8 234 139

## Beschreibung

Die Erfindung betrifft ein Verfahren und eine Vorrichtung für das Recycling von Metallschrotten, insbesondere Aluminiumschrotten.

Bei der Herstellung und Verarbeitung von Aluminiumbändern fallen an unterschiedlichen Entfallstellen Produktionsschrotte (sog. "production scrap") an. Es ist wünschenswert, diese Produktionsschrotte in einer Kreislaufführung durch Einschmelzen wieder für das Herstellen des Produkts zu nutzen, bei dessen Produktion sie anfallen. Ebenso ist es wünschenswert, nach der Herstellung angefallene Schrotte (sog. "post production scrap") wieder erneut für die Herstellung von Produkten gleicher oder ähnlicher Legierungen einzusetzen, so dass auch bei diesen Schrotten letztlich eine Kreislaufführung erreicht wird. Bei den nach der Herstellung angefallenen Schrotten kann es sich insbesondere um Schrotte handeln, die durch Einsatz, Verbrauch oder Verschleiß von Aluminiumprodukten entstehen. Die Schrotte können beispielweise von Presswerken zur Verfügung gestellt werden.

Da in Aluminiumwalzwerken typischerweise verschiedene Aluminiumlegierungen verarbeitet werden, kommt es jedoch häufig dazu, dass Schrotte verschiedener Legierungen miteinander vermischt werden. Für eine bevorzugt durchgeführte Kreislauführung muss eine solche Vermischung jedoch ausgeschlossen werden, da ansonsten Grenzwerte für Legierungselemente bei einer Vermischung von unterschiedlichen Produktionsschrotten nicht eingehalten werden können.

Um eine Vermischung zu identifizieren, werden nach dem heutigen Stand der Technik Stichproben des angefallenen Schrotts genommen und untersucht, typischerweise 2 bis 30 Stichproben. Hierbei besteht jedoch weiterhin eine erhebliche statistische Unsicherheit über die tatsächliche Zusammensetzung des Schrotts, die insbesondere zu hoch für eine effiziente Kreislaufführung der Schrotte ist.

Sollte eine Vermischung von Schrotten unentdeckt bleiben, kann das dazu führen, dass eine gesamte Schmelzofencharge von bis zu 100 t außerhalb der Spezifikationen liegt und im schlechtesten Fall verschrottet werden muss.

Vor diesem Hintergrund liegt der vorliegenden Erfindung die Aufgabe zu Grunde, ein Verfahren und eine Vorrichtung für das Recycling von Metallschrotten, insbesondere Aluminiumschrotten, zur Verfügung zu stellen, mit dem eine effizientere Kreislaufführung der Schrotte erreicht werden kann.

Diese Aufgabe wird erfindungsgemäß zumindest teilweise gelöst durch ein Verfahren für das Recycling von Metallschrotten, insbesondere Aluminiumschrotten, gemäß Patentanspruch 1, bei dem eine Menge Metallschrott, insbesondere Aluminiumschrott, in Form einer Mehrzahl von voneinander separierten Teillosen bereitgestellt wird und bei dem für jedes Teillos eine Zusammensetzungsanalyse durchgeführt und dem jeweils analysierten Teillos eine auf der Zusammensetzungsanalyse basierende Zusammensetzungsinformation zugeordnet wird.

Bei dem Metallschrott, insbesondere Aluminiumschrott, kann es sich insbesondere um Produktionsschrott, d.h. um Schrott, der während des Produktionsbetriebs anfällt, beispielsweise Besäumschrott von einer Randbesäumung eines gewalzten Aluminiumbands, handeln.

Bei dem Verfahren wird eine Menge Metallschrott, insbesondere Aluminiumschrott, in Form einer Mehrzahl von voneinander separierten Teillosen bereitgestellt. Unter voneinander separierten Teillosen werden Teile des Gesamtschrotts verstanden, die separat voneinander gelagert sind und so auseinander gehalten werden können. Die Teillose werden vorzugsweise in Form von einzelnen Gebinden bereitgestellt, bei denen der Schrott eines Teilloses jeweils in einer Packung, beispielsweise einem Schrottbehälter, zusammengefasst ist.

Vorzugsweise wird die bei einem Produktionsbetrieb anfallende Schrottmenge auf verschiedene Schrottbehälter verteilt. Insbesondere können eine Mehrzahl an Schrottbehältern vorgesehen werden, die nacheinander mit einer Menge Schrott befüllt werden. Auf diese Weise enthält ein Schrottbehälter jeweils den Schrott, der in einem bestimmten Zeitintervall während des Produktionsbetriebs angefallen ist.

Bei dem Verfahren wird für jedes Teillos eine Zusammensetzungsanalyse durchgeführt. Zu diesem Zweck wird der Schrott des Teilloses insbesondere einer chemischen Analyse unterzogen, um die Anteile (die Gehalte) eines oder mehrerer im Schrott enthaltenen Legierungselemente zu ermitteln.

Die Analyse erfolgt insbesondere für die gesamte Masse des Schrotts und nicht nur für einzelne Stichproben, die zu einer hohen Ungenauigkeit führen würden. Durch die Analyse der gesamten Masse eines Teilloses sollen Verunreinigungen identifiziert werden, sodass eine effiziente Kreislaufführung von Prozessschrotten ermöglicht wird.

Dem jeweils analysierten Teillos wird eine auf der Zusammensetzungsanalyse basierende Zusammensetzungsinformation zugeordnet. Beispielsweise können dem Teillos Werte für den Gehalt bestimmter Legierungselemente (wie z.B. Fe, Si, Mn, Mg etc.) zugeordnet werden.

Die Zuordnung kann dadurch erfolgen, dass das Teillos mit einer eindeutigen Kennung versehen wird, beispielsweise durch Beschriftung eines Schrottbehälters, der das Teillos Schrott enthält, und dass die Kennung des Teilloses in einem elektronischen Speicher einer Datenverarbeitungsanlage mit der zugehörigen Zusammensetzungsinformation verknüpft wird, beispielsweise in einer Tabelle.

Für die Kreislaufnutzung von Schrotten ist es bevorzugt, dass die Schrotte an den Entfallstellen separat gehalten werden, um eine Vermischung von unterschiedlichen Legierungen zu vermeiden. Die Separierung der Schrotte erfolgt an den Entfallstellen in kleinen Teillosen bzw. Gebinden, mit einer Masse von beispielsweise 100 bis 2.500 kg. Eine Vermischung von Schrotten ist jedoch auch in den kleinen Teillosen bzw. Gebinden nicht ausgeschlossen. Nach der Herstellung angefallene Schrotte, beispielsweise von Presswerken der Automobilindustrie, können auch in größeren Teillosen von bis zu 15.000 kg vorliegen.

Der Erfindung liegt die Erkenntnis zu Grunde, dass eine effizientere Kreislaufführung der Schrotte dadurch erreicht werden kann, dass eine Aufteilung von Schrott in kleine Teillose kombiniert wird mit einer vollständigen Analyse des Schrotts der Teillose. Auf diese Weise können mit Fremdschrotten verunreinigte Teillose identifiziert werden und gezielt von einer Kreislaufführung der Prozessschrotte ausgeschlossen und anderweitig eingesetzt werden, vorzugsweise für eine andere Legierung, insbesondere Aluminiumlegierung.

Es wurde festgestellt, dass bereits die Aufteilung des Schrotts in Teillose Vorteile bildet, da im Produktionsbetrieb Schrotte verschiedener Legierungen in der Regel nacheinander anfallen und daher durch Befüllung mehrerer Schrottbehälter nacheinander bereits eine Trennung von Schrotten verschiedener Legierungen erreicht werden kann. Es wurde jedoch ebenfalls festgestellt, dass es beim Produktwechsel im Produktionsbetrieb häufig in einzelnen Schrottbehältern zur Vermischung von Schrotten vor und nach dem Wechsel kommt. Durch die vollständige Analyse der Teillose ist es möglich, derartige Vermischungen zuverlässig zu identifizieren und bei der weiteren Verwendung der Teillose zu berücksichtigen.

Die Teillose weisen vorzugsweise jeweils eine Masse im Bereich von 500 und 15000 kg, vorzugsweise von 500 bis 5000 kg, insbesondere von 1000 bis 4000 kg auf.

Insbesondere wird praktisch die gesamte Schrottmenge eines Teilloses untersucht, so dass eine erheblich höhere Zuverlässigkeit erreicht wird als bei einer stichprobenartigen Analyse. Wird bei einem Teillos (bzw. in einem Gebinde) eine Verunreinigung festgestellt, wird dieses Teillos/Gebinde vorzugsweise nicht der Kreislaufführung zugeführt, sondern anderweitig genutzt, vorzugsweise für andere Aluminiumlegierungen. Teillose/Gebinde ohne Verunreinigung können für eine Kreislaufführung genutzt werden. Eine Verunreinigung kann durch die Bestimmung des kumulierten Gehalts einzelner Legierungselemente der gesamten Schrottmenge eines Teilloses/Gebindes bestimmt werden. Überschreitet der Gehalt eines oder mehrerer Legierungselemente bei der Zusammensetzungsanalyse beispielsweise einen vorgegebenen Schwellenwert, ist von einer Verunreinigung auszugehen. Welche Legierungselemente nicht überschritten werden dürfen, hängt von dem Produkt ab, dessen Schrott im Kreislauf gefahren wird.

Die oben genannte Aufgabe wird erfindungsgemäß weiterhin zumindest teilweise gelöst durch eine Vorrichtung, eingerichtet oder aufweisend jeweilige Mittel zur Durchführung des zuvor beschriebenen Verfahrens.

Im Folgenden werden verschiedene Ausführungsformen des Verfahrens und der Vorrichtung beschrieben, wobei die einzelnen Ausführungsformen jeweils sowohl für das Verfahren als auch für die Vorrichtung anwendbar sind und zudem beliebig miteinander kombiniert werden können.

Erfindungsgemäß wird die Zusammensetzungsanalyse eines Teilloses durchgeführt, indem der gesamte Schrott des Teilloses einer Analyseeinrichtung zugeführt und durch diese analysiert wird. Auf diese Weise wird der Schrott eines Teilloses in seiner Gesamtheit untersucht, so dass statistische Unsicherheiten, wie sie etwa bei einer Stichprobenanalyse auftreten, im Wesentlichen nicht auftreten.

Bei einer weiteren Ausführungsform umfasst die Zusammensetzungsanalyse eine spektroskopische Analyse, insbesondere eine laserinduzierte Plasmaspektroskopie (LIBS), eine Röntgenfluoreszenzanalyse (XRF) und/oder eine Prompte-Gamma-Neutronen-Aktivierungs-Analyse (PGNAA). Es wurde festgestellt, dass diese Verfahren besonders gut geeignet sind, um den gesamten Schrott eines Teilloses zu analysieren. Bei der laserinduzierten Plasmaspektroskopie wird mit einem insbesondere gepulsten Laserstrahl Material von den einzelnen Schrottkörnern abgetragen und das von dem abgetragenen Material emittierte Licht spektroskopisch untersucht. Bei der Röntgenfluoreszenzanalyse wird das Material des Schrotts mit Röntgenstrahlung angeregt und das von dem Material emittierte Licht wird spektroskopisch untersucht. Bei der Prompte-Gamma-Neutronen-Aktivierungs-Analyse werden die Atomkerne des Schrottmaterials durch Neutronen von einer radioaktiven Quelle angeregt und die von den Atomkernen emittierte Gamma- bzw. Röntgenstrahlung spektroskopisch untersucht. Mit diesen Methoden lässt sich damit analysieren, welche Legierungselemente in welcher Konzentration im Schrott enthalten sind.

Bei einer weiteren Ausführungsform enthält die Zusammensetzungsinformation einen Wert für den Gewichtsanteil mindestens einer Legierungskomponente am Gesamtgewicht des analysierten Teilloses. Bei dem Wert für den Gewichtsanteil kann es sich um einen relativen Wert, beispielsweise den Gehalt einer Legierungskomponente in Gew.-%, oder um einen absoluten Wert, beispielsweise den Gehalt der Legierungskomponente in kg, handeln.

Bei einer weiteren Ausführungsform enthält die Zusammensetzungsinformation einen Wert für das Gewicht des Teilloses, beispielsweise das Gewicht des Teilloses in kg. Zu diesem Zweck kann vor, nach oder bei der Zusammensetzungsanalyse insbesondere eine Wägung des Teilloses vorgenommen werden. Wird beispielsweise der Schrott des Teilloses mittels eines Förderbands zur Analyseeinrichtung transportiert, so kann das Schrottgewicht über eine Bandwaage ermittelt werden. Der Wert für das Gewicht des Teilloses ist insbesondere für die Entscheidung sinnvoll, in welcher Weise das betreffende Teillos weiter verwendet werden kann.

Bei einer weiteren Ausführungsform werden die Teillose als Funktion der jeweils zugeordneten Zusammensetzungsinformation und einer vorgegebenen Zuordnungsvorschrift jeweils einer von mehreren Klassen zugeordnet. Auf diese Weise wird eine Klassifizierung der Teillose anhand der jeweiligen Zusammensetzung erreicht, so dass sich die einzelnen Teillose gezielter einsetzen lassen, beispielsweise um Produkte einer bestimmten Legierungszusammensetzung herzustellen. Die Zuordnung zu einer Klasse kann beispielsweise mittels eines Computers erfolgen.

Bei einer weiteren Ausführungsform werden einer ersten Klasse nur solche Teillose zugeordnet, deren Wert für den Gewichtsanteil mindestens einer Legierungskomponente in einem vorgegebenen Bereich für diese Legierungskomponente liegt. Beispielsweise kann eine erste Klasse durch einen oberen Grenzwert für ein bestimmtes Legierungselement, z.B. Mg, definiert werden. Die Zusammensetzungsinformation enthält zu diesem Zweck vorzugsweise einen Wert für den Gehalt des bestimmten Legierungselements. Liegt der Gehalt des Legierungselements unterhalb des von der Klasse vorgegebenen Grenzwerts, so wird das betreffende Teillos dieser Klasse zugeordnet. Liegt der Gehalt des Legierungselements hingegen oberhalb des von der Klasse vorgegebenen Grenzwerts, so wird das Teillos nicht dieser Klasse, sondern ggf. einer anderen Klasse zugeordnet.

Bei einer weiteren Ausführungsform werden die Teillose als Funktion der jeweils zugeordneten Zusammensetzungsinformation jeweils einer von mehreren vorgegebenen Legierungsspezifikationen zugeordnet. Bei einem Produktionsbetrieb ist häufig bekannt, welche Legierungen während des Betriebs verarbeitet werden. Es ist daher zu erwarten, dass die bei dem Produktionsbetrieb anfallenden Schrotte nicht irgendeine beliebige Legierung aufweisen, sondern eine der bekannten beim Betrieb eingesetzten Legierungen. Diese Information wird bei der vorliegenden Ausführungsform ausgenutzt, um eine bessere Analyse der Teillose zu erreichen. Zu diesem Zweck können die bei einem Produktionsbetrieb verwendeten Legierungen als Legierungsspezifikationen vorgegeben werden. Ein analysiertes Teillos kann dann derjenigen Legierungsspezifikationen zugeordnet werden, deren Zusammensetzung zu der Zusammensetzungsinformation des Teilloses passt. Zeigt die Zusammensetzungsinformation eines Teilloses beispielsweise einen besonders geringen Mg-Gehalt an, so kann das betreffende Teillos eine Legierungsspezifikation mit geringem Mg-Gehalt zugeordnet werden, wenn die übrigen Legierungsspezifikationen höhere Mg-Gehalte verlangen.

Bei einer weiteren Ausführungsform werden aus der Mehrzahl von Teillosen ein oder mehrere Teillose mit einem vorgegebenen Zielbereich für mindestens eine erste Legierungskomponente ausgewählt, wobei die Auswahl dadurch erfolgt, dass Teillose als Funktion ihres Gehalts mindestens einer zweiten Legierungskomponente einer von mehreren vorgegebenen Legierungszusammensetzungen zugeordnet werden und nur dann ausgewählt werden, wenn die erste Legierungskomponente der dem jeweiligen Teillos zugeordneten vorgegebenen Legierungszusammensetzung innerhalb des für die erste Legierungskomponente vorgegebenen Zielbereichs liegt. Unter dem Zielbereich einer Legierungskomponente wird der Bereich verstanden, in dem der Gehalt der betreffenden Legierungskomponente bei einem ausgewählten Teillos liegen soll.

Diese Ausführungsform ist insbesondere dazu geeignet, Teillose für die Herstellung einer Legierung auszuwählen, wobei die Legierung Anforderungen an eine Legierungskomponente hat, die mit einer Analyseeinrichtung schlecht oder nicht genau genug kontrolliert werden kann, beispielsweise weil der geforderte Maximalgehalt der betreffenden Legierungskomponente unter der Nachweisgrenze liegt. Bei der vorliegenden Ausführungsform werden die geeigneten Teillose nicht direkt über die schwer zu kontrollierende erste Legierungskomponente, sondern indirekt über eine besser nachweisbare zweite Legierungskomponente bestimmt. Diese ist insbesondere möglich unter Ausnutzung der zusätzlichen Information über die grundsätzlich vorliegenden Legierungszusammensetzungen. Bei einem Produktionsbetrieb sind die Legierungszusammensetzungen der verarbeiteten Produkte typischerweise bekannt, so dass der anfallende Schrott nur einer dieser Legierungszusammensetzungen zugeordnet werden muss, um die Zusammensetzung des Schrotts zu ermitteln. Dadurch lässt sich durch charakteristische Gehalte bestimmter (zweiter) Legierungskomponenten auf die zugehörige Legierung und über die bekannte Zusammensetzung der zugehörigen Legierung wiederum auf den Gehalt einer bestimmten (ersten) Legierungskomponente schließen, die selbst schwierig zu messen ist.

Bei einer weiteren Ausführungsform werden einer vorgegebenen Klasse oder einer vorgegebenen Legierungszusammensetzung zugeordneten Teillose zu einem Großlos zusammengefasst. Auf diese Weise können hinsichtlich ihrer Zusammensetzung ähnliche oder gleiche Teillose gezielt zusammengefasst werden, um dann aufgrund der größeren Losgröße ökonomischer gelagert oder transportiert zu werden.

Bei einer weiteren Ausführungsform wird die Mehrzahl der voneinander separierten Teillose dadurch bereitgestellt, dass ein Großlos in mehrere Teillose aufgeteilt wird. Das Großlos kann beispielsweise ein Gewicht von mehr als 20 t, insbesondere mehr als 25 t aufweisen. Soll zum Beispiel ein Großlos Schrott von 25 t, beispielsweise eine große Schrottlieferung, für ein Recycling vorbereitet werden, so kann dieses Großlos beispielsweise in fünf Teile je 5 t aufgeteilt werden. Die fünf Teillose werden dann entsprechend dem beschriebenen Verfahren jeweils einer Zusammensetzungsanalyse unterzogen. Auf diese Weise können Großlose, in denen Schrotte verschiedener Legierungen vermischt sein können, in Teillose zerlegt werden, deren Zusammensetzung dann jeweils durch die Zusammensetzungsanalyse praktisch vollständig bekannt ist. Die Größe der Teillose ist vorzugsweise auf den Chargierprozess abgestimmt, da Großlose selten in Gänze einem Schmelzofen zugeführt werden.

Die Aufteilung eines Großloses in eine Mehrzahl von Teillosen ist insbesondere dann vorteilhaft, wenn der Schrott des Großloses sehr inhomogen ist. Enthält der Schrott des Großloses beispielsweise einen Motorblock mit stark Cu-haltiger Legierung, so ist der Cu-Gehalt des Großloses lokal sehr stark konzentriert. Würde dem Großlos ohne Aufteilung in Teillose und Zusammensetzungsanalyse einfach ein Teil entnommen und einem Schmelzofen zugeführt, so hinge der Cu-Gehalt des entnommenen Teils maßgeblich davon ab, ob der entnommene Teil den Motorblock umfasst oder nicht. Die Unsicherheit bzgl. des Cu-Gehalts wäre daher bei dieser Vorgehensweise sehr groß. Durch die Aufteilung in Teillose und die praktisch vollständige Analyse der Teillose (anstelle lediglich einer Stichprobenanlyse) kann die Unsicherheit über die Zusammensetzung der einzelnen Teillose erheblich reduziert werden.

Bei einer weiteren Ausführungsform wird aus einer Mehrzahl von Teillosen mit jeweils zugeordneter Zusammensetzungsinformation für die Herstellung einer Legierung mit vorgegebener Spezifikation für die zu erzielende Legierungszusammensetzung eine Teilmenge geeigneter Teillose ausgewählt, und zwar als Funktion der den Teillosen zugeordneten Zusammensetzungsinformationen und der vorgegebenen Spezifikation.

Auf diese Weise kann eine optimierte Zielcharge für die Herstellung einer Legierung unter möglichst hohem Schrotteinsatz bereitgestellt werden. Computeralgorithmen zur Chargenoptimierung sind grundsätzlich bekannt. Deren Anwendung ist jedoch bisher problematisch gewesen aufgrund der hohen Unsicherheiten bezüglich der Zusammensetzung des Schrotts. Mit der Aufteilung des Schrotts in Teillose und der zugeordneten, zuverlässigen Zusammensetzungsinformationen lässt sich eine solche Chargenoptimierung mit dem beschriebenen Verfahren deutlich zuverlässiger durchführen.

Bei einer weiteren Ausführungsform werden die Teillose bis zur Auswahl für die Herstellung einer Legierung mit vorgegebener Spezifikation für die zu erzielende Legierungszusammensetzung für den wahlfreien Zugriff gelagert. Auf diese Weise lassen sich die einzelnen Teillose abhängig von ihrer Zusammensetzung gezielt entnehmen und einer bestimmten Verwendung zuführen. Die Lagerung der Teillose kann beispielsweise in einzelnen Schrottbehältern in einem Regallager erfolgen.

Weitere Merkmale und Vorteile der Erfindung ergeben sich aus der nachfolgenden Beschreibung mehrerer Ausführungsbeispiele, wobei auf die beigefügte Zeichnung Bezug genommen wird.

In der Zeichnung zeigen
- Fig. 1: ein erstes Ausführungsbeispiel des erfindungsgemäßen Verfahrens,
- Fig. 2: einen Zusammensetzungsanalyse-Schritt für das Verfahren aus Fig. 1,
- Fig. 3: ein zweites Ausführungsbeispiel des erfindungsgemäßen Verfahrens,
- Fig. 4: ein drittes Ausführungsbeispiel des erfindungsgemäßen Verfahrens und
- Fig. 5: ein viertes Ausführungsbeispiel des erfindungsgemäßen Verfahrens.

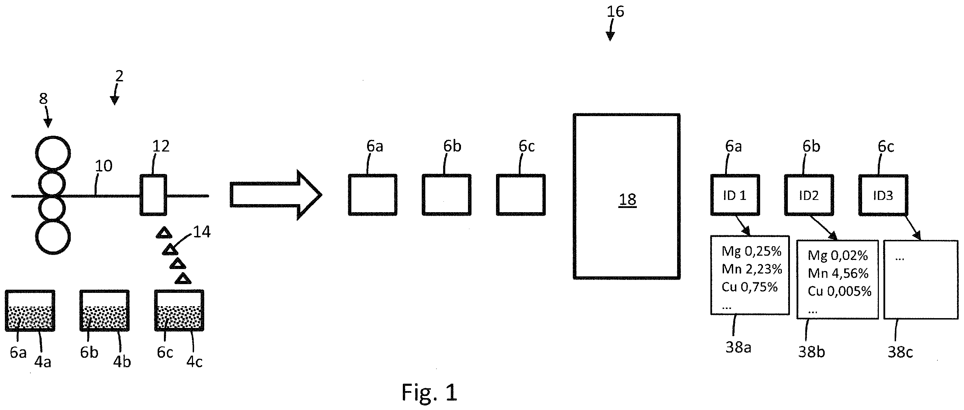

Fig. 1 zeigt ein erstes Ausführungsbeispiel des erfindungsgemäßen Verfahrens. Bei dem Verfahren wird während eines Produktionsbetriebs 2 anfallender Aluminiumschrott in mehrere Schrottbehälter 4a-c gefüllt und auf diese Weise in Form einer Mehrzahl von voneinander separierten Teillosen 6a-c bereitgestellt. In Fig. 1 sind exemplarisch nur drei Teillose 6a-c gezeigt, während bei einem Produktionsbetrieb 2 typischerweise eine erheblich größere Zahl an Teillosen bereitgestellt wird.

Bei dem Produktionsbetrieb 2 handelt es sich in diesem Beispiel um einen Walzbetrieb (in Fig. 1 durch das Walzgerüst 8 symbolisiert) zur Herstellung von Aluminiumbändern 10. Bei einem solchen Walzbetrieb fallen unter anderem an der Besäumschere 12 beim Randbesäumen der gewalzten Bänder 10 Besäumschrotte 14 an. Die zunächst leeren Schrottbehälter 4a-c werden an der Besäumschere 12 bereitgestellt und dann nacheinander bis zu einem vorgegebenen Gewicht von beispielsweise 2 t mit Schrott 14 befüllt.

Beim Walzbetrieb werden typischerweise Produkte aus verschiedenen Legierungen nacheinander gewalzt. Bei einem Legierungswechsel kann dies dazu führen, dass in einen Schrottbehälter Schrotte 14 aus verschiedenen Legierungen gelangen, wenn der Schrottbehälter nicht genau beim Übergang von einem Walzprodukt einer Legierung zu einem Walzprodukt einer anderen Legierung an der Besäumschere 12 gewechselt wird.

Es wurde festgestellt, dass eine lediglich stichprobenartige Untersuchung der Schrotte in den Teillosen zu großen statistischen Ungenauigkeiten führt, da die tatsächliche Zusammensetzung der Schrotte zum Teil erheblich von der stichprobenartigen Analyse abweicht. Beim Einschmelzen von Aluminium konnte ein Tiegel daher in der Vergangenheit nur etwa zu 80% mit Schrotten befüllt und eingeschmolzen werden. Nach dem Einschmelzen war dann eine chemische Analyse der Schmelze erforderlich, um die tatsächlich vorliegende Zusammensetzung der Legierung zu ermitteln. Diese wich häufig signifikant von der aus den stichprobenartigen Analysen der Schrotte berechnete Zusammensetzung ab, so dass die übrigen 20% der Tiegelfüllung zur Korrektur der Legierungszusammensetzung definiert befüllt werden musste.

Dieses Problem wird vorliegend dadurch überwunden, dass die Schrotte in Teillosen bereitgestellt werden, wodurch eine gezielte Auswahl definierter Schrottmengen für das Einschmelzen ermöglicht wird, und andererseits für jedes Teillos eine Zusammensetzungsanalyse durchgeführt wird.

Entsprechend wird bei dem Ausführungsbeispiel in Fig. 1 nach der Bereitstellung der Teillose 6a-c in einem Analyseschritt 16 eine Zusammensetzungsanalyse durchgeführt. Zu diesem Zweck werden die Behälter 4a-c mit den Teillosen 6a-c separat voneinander einer Analyseeinrichtung 18 zugeführt, mit der die Zusammensetzung der Schrotte der Teillose 6a-c analysiert werden kann.

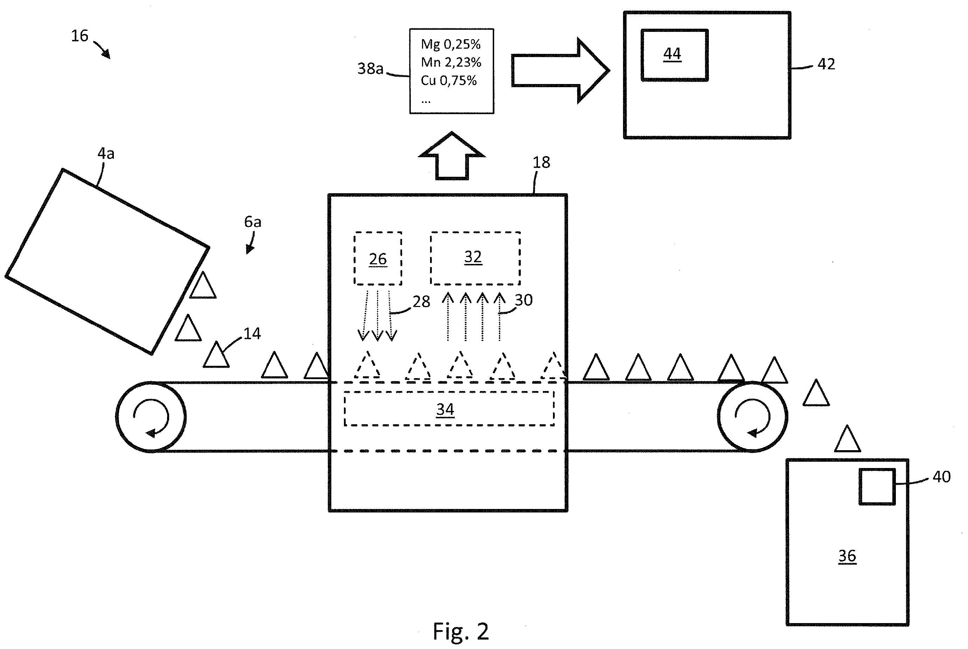

Fig. 2 zeigt ein Beispiel für einen solchen Analyseschritt 16. Der Inhalt des Schrottbehälters 4a, d.h. der Schrott 14 des Teilloses 6a, wird vorzugsweise gleichmäßig auf ein Förderband 22 gegeben und so sukzessive durch eine Analyseeinrichtung 18 transportiert. Bei der Analyseeinrichtung 18 handelt es sich in diesem Beispiel um eine Analyseeinrichtung für die Prompte Gamma Neutronen Aktivierungs Analyse (PGNAA). Zu diesem Zweck weist die Analyseeinrichtung 18 eine Neutronenquelle 26 auf, beispielsweise ein geeignetes radioaktives Nuklid wie ²⁵²Cf, welches Neutronen 28 bereitstellt, mit denen der Schrott 14 beaufschlagt wird. Die Neutronen 28 führen zu einer Anregung der Atomkerne im Schrott 14, so dass die Atomkerne Röntgenstrahlen 30 mit einem für das jeweilige Element typischen Spektrum emittieren. Durch die Analyse der Röntgenstrahlen 30 in einem Spektrometer 32 lässt sich so auf die im Schrott enthaltenen Elemente sowie auf deren Gehalt schließen. Die Analyseeinrichtung 18 weist weiterhin auch eine Bandwaage 34 auf, durch die das Gewicht des Schrotts 14 aus dem Teillos 6a bestimmt werden kann. Aus dem Analyseergebnis des Spektrometers 32 und der Bandwaage 34 kann die Analyseeinrichtung 18 zuverlässig den relativen und absoluten Gehalt eines Legierungselements im Teillos 6a bestimmen. Die Zuverlässigkeit des Analyseergebnisses wird bei dieser Art der Analyse insbesondere dadurch erreicht, dass praktisch die gesamte Schrottmenge des Teilloses 6a analysiert und nicht nur ein kleiner Bruchteil wie bei der Stichprobenanalyse.

Nach der Analyse in der Analyseeinrichtung 18 wird der Schrott 14 über das Förderband 22 zu einem Schrottbehälter 36 transportiert und in diesem separat bis zur weiteren Verwendung gelagert. Insbesondere erfolgt zunächst keine Vermischung verschiedener Teillose 6a-c. Dem im Schrottbehälter 36 wieder aufgefangenen Teillos 6a wird eine Zusammensetzungsinformation 38 zugeordnet, die auf dem Analyseergebnis der Analyseeinrichtung 18 basiert. Die Zusammensetzungsinformation 38a kann beispielsweise Werte für absolute oder relative Gehalte bestimmter Legierungselemente des Teilloses 6a und das Gewicht des Teilloses 6a enthalten. Für die Zuordnung der Zusammensetzungsinformation ist dem Schrottbehälter 36, der das Teillos 6a enthält, eine Kennung 40 zugeordnet. Diese Kennung 40 ist beispielsweise als Barcode oder ähnliches am Schrottbehälter 36 angebracht. In den Figuren 1 und 3 bis 5 wird diese den Teillosen jeweils zugeordnete Kennung 40 durch die Beschriftung "ID1", "ID2", "ID3" etc. symbolisiert.

Die Zusammensetzungsinformation 38a und die Kennung 40 werden an eine an die Analyseeinrichtung 18 angeschlossene Datenverarbeitungsanlage 42 übermittelt.

Diese verknüpft die Kennung 40 mit der Zusammensetzungsinformation 38a des Teilloses 6a, beispielsweise indem im Speicher 44 der Datenverarbeitungsanlage 42 eine Tabelle gespeichert wird, in der die Kennung 40 zusammen mit der Zusammensetzungsinformation 38a gespeichert wird.

Der in Fig. 2 dargestellte Analyseschritt 16 wird im Ausführungsbeispiel aus Fig. 1 für alle Teillose 6a-c durchgeführt, so dass nach diesem Schritt jedem Teillos 6a-c eine entsprechende Zusammensetzungsinformation 38a-c zugeordnet ist.

Dadurch dass am Ende des Verfahrens aus Fig. 1 jedem Teillos 6a-c eine entsprechende und insbesondere zuverlässige Zusammensetzungsinformation 38a-c zugeordnet ist, können die Teillose 6a-c nun gezielt für die geeignete Verwendung ausgewählt werden.

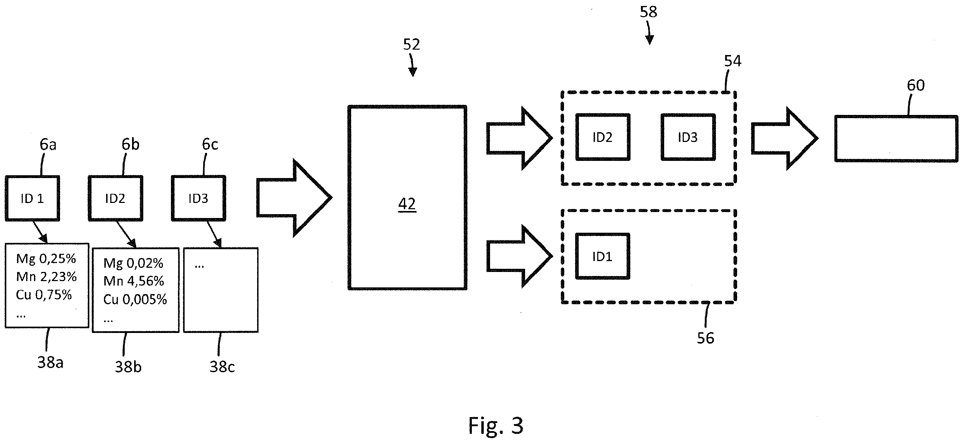

Figur 3 zeigt ein Ausführungsbeispiel des Verfahrens, bei dem die Teillose 6a-c über die Zusammensetzungsinformationen 38a-c für eine bestimmte Verwendung in verschiedene Klassen eingeteilt werden. Das Verfahren dieses Ausführungsbeispiels umfasst zunächst die in Fig. 1 dargestellten Schritte der Bereitstellung der Menge Aluminiumschrott in Teillosen 6a-c und der Zusammensetzungsanalyse sowie der Zuordnung der Zusammensetzungsinformationen 38a-c zu den jeweiligen Teillosen 6a-c.

Im nachfolgenden Schritt 52 werden die Teillose 6a-c als Funktion der jeweils zugeordneten Zusammensetzungsinformation 38a-c und einer vorgegebenen Zuordnungsvorschrift jeweils einer von einer ersten Klasse 54 und einer zweiten Klasse 56 zugeordnet. Diese Zuordnung erfolgt in dem Beispiel im Schritt 52 zunächst mit der Datenverarbeitungsanlage 42.

Die Zuordnungsvorschrift ist in diesem Beispiel so definiert, dass Teillose mit einem Mg-Gehalt von max. 0,1 Gew.-% der ersten Klasse 54 zugeordnet werden und Teillose mit einem Mg-Gehalt von mehr als 0,1 Gew.-% der zweiten Klasse 56 zugeordnet werden. Auf diese Weise lassen sich gezielt Teillose für die Herstellung einer Mgarmen Legierung auswählen, indem zu diesem Zweck nur Teillose aus der ersten Klasse gewählt werden.

Die Zuordnung der jeweiligen Klasse zu den einzelnen Teillosen kann zunächst im Speicher 44 der Datenverarbeitungsanlage 42 erfolgen. In einem weiteren Schritt 58 können die entsprechenden Teillose 6a-c bzw. die Schrottbehälter, in denen die Teillose 6a-c aufbewahrt werden, mit einer entsprechenden Kennung versehen werden. Weiterhin können die Teillose einer Klasse auch räumlich einander zugeordnet werden, indem die Teillose klassenweise sortiert gelagert werden. Ebenfalls ist es denkbar, mehrere oder alle Teillose einer Klasse zu einem Großlos 60 zusammenzuführen. So können die Teillose 6b und 6c der ersten Klasse 54 in einen gemeinsamen Schrottbehälter gefüllt und dann beispielsweise an ein Aluminiumschmelzwerk verkauft oder direkt eingeschmolzen werden.

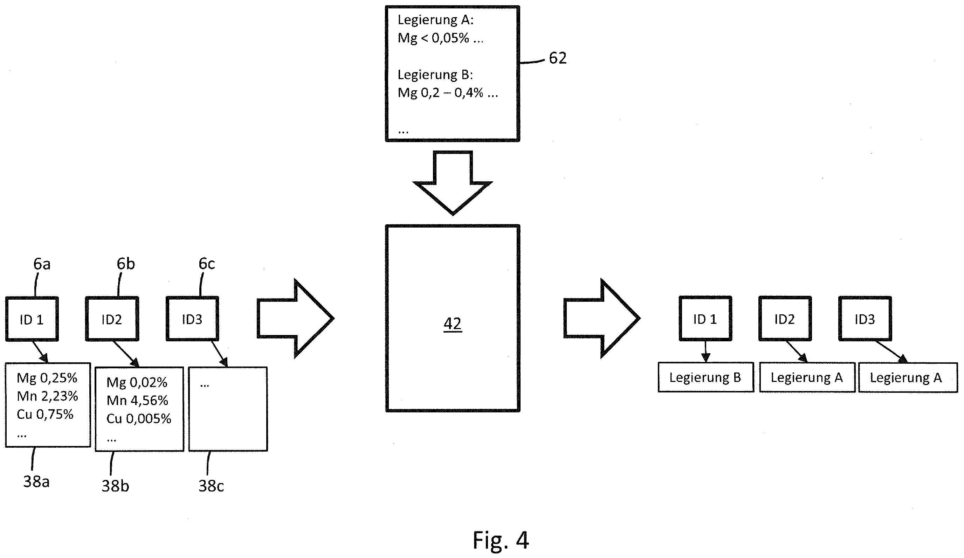

Figur 4 zeigt ein weiteres Ausführungsbeispiel des Verfahrens, bei dem die Teillose 6a-c über die Zusammensetzungsinformationen 38a-c sowie einem Datensatz 62 mit vorgegebenen Legierungsspezifikationen jeweils einer Legierungsspezifikation zugeordnet werden. Das Verfahren dieses Ausführungsbeispiels umfasst zunächst die in Fig. 1 dargestellten Schritte der Bereitstellung der Menge Aluminiumschrott in Teillosen 6a-c und der Zusammensetzungsanalyse sowie der Zuordnung der Zusammensetzungsinformationen 38a-c zu den jeweiligen Teillosen 6a-c.

Die Legierungsspezifikationen der im Produktionsbetrieb 2 verarbeiteten Legierungen sind typischerweise bekannt. Es wurde erkannt, dass sich diese Information vorteilhaft zur Analyse der Teillose 6a-c einsetzen lässt.

Zu diesem Zweck werden die Legierungsspezifikationen der bei dem Produktionsbetrieb 2 verarbeiteten Legierungen in einem Datensatz 62 zusammengestellt, wobei der Datensatz zu jeder der Legierungsspezifikationen (Legierung A, Legierung B, etc.) Informationen über die Bereichsgrenzen bestimmter Legierungselemente (z.B. Si, Fe, Mn, Mg, etc.) enthält. Der Datensatz ist im Speicher 44 der Datenverarbeitungsanlage 42 gespeichert.

Die Datenverarbeitungsanlage 42 ist dazu eingerichtet, die Zusammensetzungsinformationen 38a-c mit den Bereichsgrenzen der Legierungselemente der einzelnen Legierungen A, B etc. abzugleichen, und die Teillose 6a-c der jeweils passenden Legierung zuzuordnen. Im günstigsten Fall ist die Zuordnung eindeutig, so dass die jeweils verarbeitete Zusammensetzungsinformation nur zu genau einer Legierung aus dem Datensatz passt. Passen mehreren Legierungen aus dem Datensatz zu der Zusammensetzungsinformation, so ist im Programm der Datenverarbeitungsanlage 42 eine Regel implementiert, die bestimmt, welcher dieser mehreren Legierungen das entsprechende Teillos zugeordnet wird.

In dem in Figur 4 dargestellten Beispiel fordert die Spezifikation der Legierung A beispielsweise einen Mg-Gehalt von < 0,05%, während die übrigen Legierungen im Datensatz 62 einen höheren Mg-Gehalt erfordern. In diesem Fall kann beispielsweise das Teillos 6b eindeutig der Legierung A zugeordnet werden.

Die Zuordnung kann wiederum durch Speichern einer Verknüpfung der Kennung 40 des Teilloses mit der zugeordneten Legierung im Speicher 44 erfolgen oder durch Anbringung einer entsprechenden Kennung mit der zugeordneten Legierung an dem entsprechenden Teillos bzw. dem zugehörigen Schrottbehälter.

Die Zuordnung bekannter Legierungen zu den einzelnen Teillosen erlaubt eine bessere Analyse, da vorbekannte Informationen bei der Analyse ausgenutzt werden können. Insbesondere erlaubt diese Vorgehensweise auch die zuverlässige Klassifizierung von Teillosen zur Herstellung von Legierungen mit Grenzen für bestimmte Legierungselemente, die unterhalb der Nachweisschwelle der Analyseeinrichtung 18 liegen.

Werden beispielsweise Teillose mit besonders geringem Mg-Gehalt gesucht, die einen Mg-Gehalt unterhalb der Nachweisschwelle haben, und ist bekannt, dass derartig geringe Mg-Gehalt nur bei einer Legierung auftreten, die einen charakteristischen Mn-Gehalt aufweist, so können über eine Zuordnung der Teillose zu vorgegebenen Legierungen über den Mn-Gehalt die Teillose der entsprechenden Legierung mit dem charakteristischen Mn-Gehalt und folglich mit dem gewünscht niedrigen Mg-Gehalt ausgewählt werden. Diese Vorgehensweise erlaubt demnach die Auswahl von Legierungen mit bestimmten Anforderungen an ein erstes Legierungselement (hier Mg) durch eine Zuordnung über ein zweites Legierungselement (hier Mn), das besser nachweisbar ist.

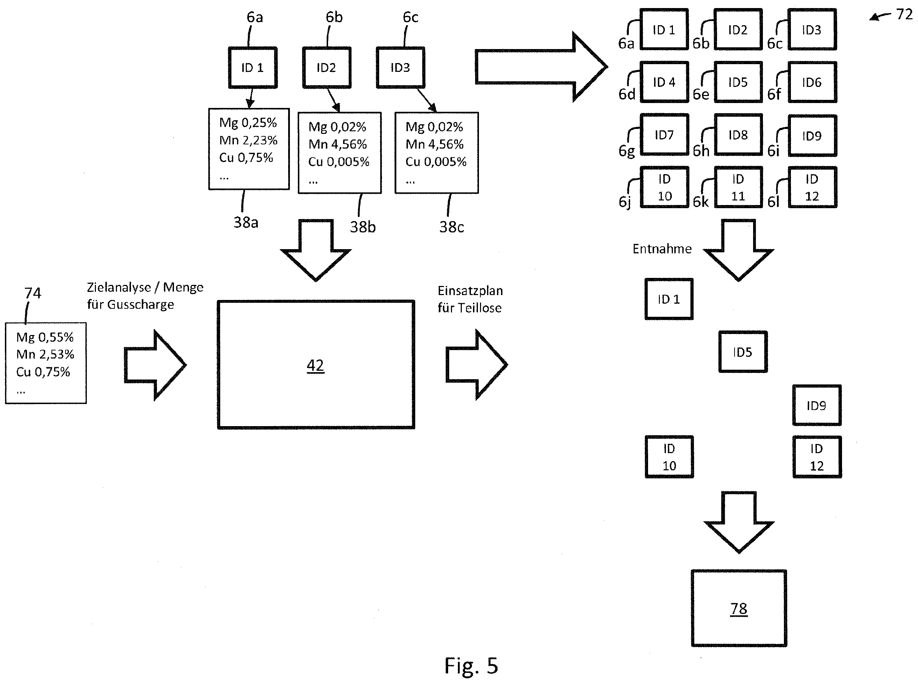

Figur 5 zeigt ein weiteres Ausführungsbeispiel des Verfahrens, bei dem die Teillose 6a-c über die Zusammensetzungsinformationen 38a-c gezielt zur Herstellung einer vorgegebenen Ziellegierung ausgewählt werden. Das Verfahren dieses Ausführungsbeispiels umfasst zunächst die in Fig. 1 dargestellten Schritte der Bereitstellung der Menge Aluminiumschrott in Teillosen 6a-c und der Zusammensetzungsanalyse sowie der Zuordnung der Zusammensetzungsinformationen 38a-c zu den jeweiligen Teillosen 6a-c.

Die Teillose 6a-c werden separat zugreifbar in einem Lager 72 gelagert, das weitere Teillose 6d-l aufweist, denen ebenfalls eine entsprechende Zusammensetzungsinformation 38d-l zugeordnet ist. Die Zusammensetzungsinformationen 38a-l werden im Speicher 44 der Datenverarbeitungsanlage 42 abgelegt.

Zur Herstellung einer bestimmten Legierung mit einer vorgegebenen Legierungsspezifikation 74 wird die Legierungsspezifikation 74 mit dem gewünschten Gewicht an die Datenverarbeitungsanlage 42 übermittelt. Mithilfe einer Software zur Chargenoptimierung bestimmt die Datenverarbeitungsanlage 42 aus der gewünschten Legierungsspezifikation 74 und den Zusammensetzungsinformationen 38a-l, die neben der jeweiligen Zusammensetzung auch einen Wert für das jeweilige Gewicht der einzelnen Teillose 6a-l umfassen, eine Auswahl bzw. Teilmenge 76 der Teillose 6a-l, die die geeigneten Legierungselemente in den geeigneten Gehalten und mit dem geeigneten Gewicht aufweisen. Diese Auswahl bzw. Teilmenge 76 der Teillose 6a-l kann dann dem Lager 72 entnommen und beispielsweise zu einem Großlos 78 zusammengefasst werden, dass sodann an ein Schmelzwerk geliefert oder direkt eingeschmolzen werden kann.

Auf diese Weise kann eine optimierte Zielcharge mit maximalem Schrotteinsatz zur Herstellung einer vorgegebenen Legierung erreicht werden. Insbesondere kann der Schmelztiegel auf diese Weise vollständig oder nahezu vollständig mit Schrott gefüllt werden, umdiegewünschte Legierung zu erreichen.

## Patentansprüche

1. Verfahren für das Recycling von Metallschrotten, insbesondere Aluminiumschrotten,
- bei dem eine Menge Metallschrott (14), insbesondere Aluminiumschrott, in Form einer Mehrzahl von voneinander separierten Teillosen (6a-l) bereitgestellt wird,
- bei dem für jedes Teillos (6a-1) eine Zusammensetzungsanalyse durchgeführt und dem jeweils analysierten Teillos (6a-1) eine auf der Zusammensetzungsanalyse basierende Zusammensetzungsinformation (38a-l) zugeordnet wird, wobei die Zusammensetzungsanalyse eines Teilloses (6a-l) durchgeführt wird, indem der gesamte Schrott (14) des Teilloses (6a-l), umfassend mehrere Schrottkörner, einer Analyseeinrichtung (18) zugeführt und durch diese analysiert wird, und
- bei dem aus einer Mehrzahl von Teillosen (6a-l) mit jeweils zugeordneter Zusammensetzungsinformation (38a-1) für die Herstellung einer Legierung mit vorgegebener Spezifikation für die zu erzielende Legierungszusammensetzung eine Teilmenge (76) geeigneter Teillose (6a-l) ausgewählt wird, und zwar als Funktion der den Teillosen (6a-l) zugeordneten Zusammensetzungsinformationen (38a-1) und der vorgegebenen Spezifikation.

2. Verfahren nach Anspruch 1,
**dadurch gekennzeichnet, dass** die Zusammensetzungsanalyse eine spektroskopische Analyse umfasst, insbesondere eine laserinduzierte Plasmaspektroskopie (LIBS), eine Röntgenfluoreszenzanalyse (XRF) und/oder eine Prompte-Gamma-Neutronen-Aktivierungs-Analyse (PGNAA).

3. Verfahren nach einem der Ansprüche 1 oder 2,
**dadurch gekennzeichnet, dass** die Zusammensetzungsinformation (38a-l) einen Wert für den Gewichtsanteil mindestens einer Legierungskomponente am Gesamtgewicht des analysierten Teilloses (6a-1) enthält.

4. Verfahren nach einem der Ansprüche 1 bis 3,
**dadurch gekennzeichnet, dass** die Zusammensetzungsinformation (38a-1) einen Wert für das Gewicht des Teilloses (6a-l) enthält.

5. Verfahren nach einem der Ansprüche 1 bis 4,
**dadurch gekennzeichnet, dass** die Teillose (6a-l) als Funktion der jeweils zugeordneten Zusammensetzungsinformation (38a-1) und einer vorgegebenen Zuordnungsvorschrift jeweils einer von mehreren Klassen (54, 56) zugeordnet werden.

6. Verfahren nach Anspruch 5,
**dadurch gekennzeichnet, dass** einer ersten Klasse (54) nur solche Teillose (6a-1) zugeordnet werden, deren Wert für den Gewichtsanteil mindestens einer Legierungskomponente in einem vorgegebenen Bereich für diese Legierungskomponente liegt.

7. Verfahren nach einem der Ansprüche 1 bis 6,
**dadurch gekennzeichnet, dass** die Teillose (6a-l) als Funktion der jeweils zugeordneten Zusammensetzungsinformation (38a-l) jeweils einer von mehreren vorgegebenen Legierungsspezifikationen zugeordnet werden.

8. Verfahren nach einem der Ansprüche 1 bis 7,
bei dem aus der Mehrzahl von Teillosen (6a-l) ein oder mehrere Teillose (6a-1) mit einem vorgegebenen Zielbereich für mindestens eine erste Legierungskomponente ausgewählt werden, wobei die Auswahl dadurch erfolgt, dass Teillose (6a-l) als Funktion ihres Gehalts mindestens einer zweiten Legierungskomponente einer von mehreren vorgegebenen Legierungszusammensetzungen zugeordnet werden und nur dann ausgewählt werden, wenn die erste Legierungskomponente der dem jeweiligen Teillos (6a-l) zugeordneten vorgegebenen Legierungszusammensetzung innerhalb des für die erste Legierungskomponente vorgegebenen Zielbereichs liegt.

9. Verfahren nach einem der Ansprüche 5 bis 8,
bei dem einer vorgegebenen Klasse (54, 56) oder einer vorgegebenen Legierungszusammensetzung zugeordnete Teillose (6a-l) zu einem Großlos (60, 78) zusammengefasst werden.

10. Verfahren nach einem der Ansprüche 1 bis 9,
bei dem die Teillose (6a-l) bis zur Auswahl für die Herstellung einer Legierung mit vorgegebener Spezifikation für die zu erzielende Legierungszusammensetzung für den wahlfreien Zugriff gelagert werden.

11. Verfahren nach einem der Ansprüche 1 bis 10,
**dadurch gekennzeichnet, dass** die Mehrzahl der voneinander separierten Teillose (6a-l) dadurch bereitgestellt werden, dass ein Großlos in mehrere Teillose (6a-l) aufgeteilt wird.

## Claims

1. Method for recycling metal scraps, particularly aluminium scraps,
- in which an amount of metal scrap (14), particularly aluminium scrap is provided in the form of a plurality of separated split lots (6a-l),
- in which, for each split lot (6a-l), a composition analysis is carried out and an item of composition information (38a-l) based on said composition analysis is assigned to the respective split lot (6a-l) that has been analysed, wherein the composition analysis of a split lot (6a-l) is carried out in that the entire scrap (14) of said split lot (6a-l), comprising several scrap pieces, is delivered to an analysis device (18) and is analysed by said device, and
- in which, for the production of an alloy with predetermined specification for the alloy composition to be obtained, a subset (76) of suitable split lots (6a-l) is selected from a plurality of split lots (6a-l) with assigned item of composition information (38a-l) in each case as a function of the items of composition information assigned to the split lots (6a-l) and of the predetermined specification.

2. Method according to Claim 1,
**characterised in that** the composition analysis comprises a spectroscopic analysis, in particular a laser-induced breakdown spectroscopy (LIBS), an X-ray fluorescence analysis (XRF) and/or a prompt-gamma neutron activation analysis (PGNAA).

3. Method according to any one of Claims 1 or 2,
**characterised in that** the item of composition information (38a-l) contains a value for the proportion of weight of at least one alloy component to the total weight of the analysed split lot (6a-l).

4. Method according to any one of Claims 1 to 3,
**characterised in that** the item of composition information (38a-1) contains a value for the weight of the split lot (6a-1).

5. Method according to any one of Claims 1 to 4,
**characterised in that** the split lots (6a-l) are assigned in each case to one of a plurality of classes (54, 56) as a function of the respectively assigned item of composition information (38a-1) and a predetermined assignment rule.

6. Method according to Claim 5,
**characterised in that** only such split lots (6a-l) are assigned to a first class (54), the value of which for the proportion of weight of at least one alloy component lies in a predetermined range for said alloy component.

7. Method according to any one of Claims 1 to 6,
**characterised in that** the split lots (6a-l) are assigned in each case to one of a plurality of predetermined alloy specifications as a function of the respectively assigned item of composition information (38a-l).

8. Method according to any one of Claims 1 to 7,
in which one or a plurality of split lots (6a-l) with a predetermined target range for at least a first alloy component are selected from the plurality of split lots (6a-l), wherein the selection is performed in that split lots (6a-l) are assigned to one of a plurality of predetermined alloy compositions as a function of their respective content of at least a second alloy component and are selected only if the first alloy component of the predetermined alloy composition assigned to the respective split lot (6a-l) lies within the target range predetermined for the first alloy component.

9. Method according to any one of Claims 5 to 8,
in which split lots (6a-l) assigned to a predetermined class (54, 56) or to a predetermined alloy composition are combined to form a large lot (60, 78).

10. Method according to one of Claims 1 to 9,
in which the split lots (6a-l) are stored for random access until the selection for the production of an alloy with predetermined specification for the alloy composition to be obtained.

11. Method according to any one of Claims 1 to 10,
**characterised in that** the plurality of separated split lots (6a-l) is provided by dividing a large lot into a plurality of split lots (6a-l).

## Revendications

1. Procédé pour le recyclage de déchets métalliques, notamment de déchets d'aluminium,
- dans lequel une quantité de déchets métalliques (14), notamment de déchets d'aluminium, est mise à disposition sous forme d'une pluralité de lots partiels (6a-l) séparés les uns des autres,
- dans lequel une analyse de composition est effectuée pour chaque lot partiel (6a-l) et une information de composition (38a-l) basée sur l'analyse de composition est attribuée respectivement au lot partiel (6a-l) analysé, l'analyse de composition d'un lot partiel (6a-l) étant effectuée en acheminant l'ensemble des déchets (14) du lot partiel (6a-l) incluant une pluralité de pièces de déchets à un dispositif d'analyse (18) et en l'analysant avec celui-ci, et
- dans lequel une quantité partielle (76) de lots partiels (6a-l) appropriés est sélectionnée à partir d'une pluralité de lots partiels (6a-l) avec l'information de composition (38a-l) respectivement attribuée pour la fabrication d'un alliage ayant une spécification prédéfinie pour la composition d'alliage à obtenir, et ce en fonction des informations de composition (38a-l) attribuées aux lots partiels (6a-l) et de la spécification prédéfinie.

2. Procédé selon la revendication 1,
**caractérisé en ce que** l'analyse de composition comprend une analyse spectroscopique, notamment une spectroscopie d'émission atomique de plasma induit par laser (LIBS), une analyse de fluorescence de rayons X (XFR) et/ou une analyse par activation neutronique aux gamma prompts (PGNAA).

3. Procédé selon l'une des revendications 1 ou 2,
**caractérisé en ce que** l'information de composition (38a-l) contient une valeur pour la part massique d'au moins un composant d'alliage au poids total du lot partiel (6a-l) analysé.

4. Procédé selon l'une des revendications 1 à 3,
**caractérisé en ce que** l'information de composition (38a-l) contient une valeur pour le poids du lot partiel (6a-l).

5. Procédé selon l'une des revendications 1 à 4,
**caractérisé en ce que** les lots partiels (6a-l) sont attribués respectivement à une classe (54, 56) parmi plusieurs en fonction de l'information de composition (38a-l) et d'une règle d'attribution prédéfinie.

6. Procédé selon la revendication 5,
**caractérisé en ce qu'**à une première classe (54) ne sont attribués que des lots partiels (6a-l) dont la valeur de la part massique d'au moins un composant d'alliage se trouve dans une plage prédéfinie pour ce composant d'alliage.

7. Procédé selon l'une des revendications 1 à 6,
**caractérisé en ce que** les lots partiels (6a-l) sont attribués respectivement à une spécification d'alliage prédéfinie parmi plusieurs, en fonction de l'information de composition (38a-l) respectivement attribuée.

8. Procédé selon l'une des revendications 1 à 7,
pour lequel un ou plusieurs lots partiels (6a-l) ayant une plage cible prédéfinie pour au moins un premier composant d'alliage sont sélectionnés parmi la pluralité de lots partiels (6a-l), la sélection étant effectuée en attribuant des lots partiels (6a-l) à une compositions d'alliage prédéfinies parmi plusieurs, en fonction de leur teneur en au moins un deuxième composant d'alliage et en ne les sélectionnant que lorsque le premier composant d'alliage de la composition d'alliage prédéfinie attribuée au lot partiel (6a-l) se trouve dans la plage cible prédéfinie pour le premier composant d'alliage.

9. Procédé selon l'une des revendications 5 à 8,
dans lequel des lots partiels (6a-l) attribués à une classe (54, 56) prédéfinie ou à une composition d'alliage prédéfinie sont regroupés en un grand lot (60, 78).

10. Procédé selon l'une des revendications 1 à 9,
dans lequel les lots partiels (6a-l) sont entreposés pour un accès au choix libre jusqu'à la sélection pour la fabrication d'un alliage ayant la spécification prédéfinie pour la composition d'alliage à obtenir.

11. Procédé selon l'une des revendications 1 à 10,
**caractérisé en ce que** la pluralité de lots partiels (6a-l) séparés les uns des autres est mise à disposition en séparant un grand lot en plusieurs lots partiels (6a-l).
